# EUROPEAN PATENT APPLICATION

(11) **EP 4 693 174 A1**
(43) Date of publication of application: **11.02.2026**
(21) Application number: 23930652.5
(22) Date of filing: 31.03.2023
(51) Int. Cl.: G06T 7/00

(54) **DETERMINATION METHOD, DETERMINATION PROGRAM, AND INFORMATION PROCESSING DEVICE**

(71) Applicant: Fujitsu Limited, Kawasaki-shi, Kanagawa 211-8588 (JP)
(72) Inventor: UCHIDA, Hidetsugu, Kawasaki-shi, Kanagawa 211-8588 (JP)
(74) Representative: Hoffmann Eitle
(86) International application number: PCT/JP2023/013594
(87) International publication number: WO 2024/202017

(57) **Abstract**

In a determination method, a computer executes a process including, when identification information that identifies a person detected from an image is obtained, calculating a probability value indicating likelihood that the identification information corresponds to the person, and when location information of the person is obtained, referring a memory that stores a probability threshold and location information for each of multiple services in association with each other, and determining whether a calculated probability value is equal to or greater than the probability threshold of a service that corresponds to the location information of the person among the multiple services.

## Description

### TECHNICAL FIELD

The present invention relates to a determination method, a determination program and an information processing device.

### BACKGROUND ART

A method for determining an authentication score threshold for each service type to allow use of the service has been disclosed (see, for example, Patent Document 1).

### CITATION LIST

### PATENT DOCUMENT

PATENT DOCUMENT 1: Japanese Patent Application Publication No. 2003-248661

### SUMMARY OF THE INVENTION

### TECHNICAL PROBLEM

According to this method, an authentication processing device recognizes the service type selected by an individual, determines an authentication score for allowing use of that service, and acquires biometric information. The authentication processing device then determines whether the individual is permitted to use the service type selected by the individual. However, this increases the processing load required for authentication processing.

In one aspect, this invention aims to provide a determination method, a determination program, and an information processing device that can reduce the processing load required for authentication processing.

### SOLUTION TO PROBLEM

In one aspect, in a determination method, a computer executes a process including, when identification information that identifies a person detected from an image is obtained, calculating a probability value indicating likelihood that the identification information corresponds to the person, and when location information of the person is obtained, referring a memory that stores a probability threshold and location information for each of multiple services in association with each other, and determining whether a calculated probability value is equal to or greater than the probability threshold of a service that corresponds to the location information of the person among the multiple services.

### ADVANTAGEOUS EFFECTS OF INVENTION]

The processing load required for authentication processing can be reduced.

### BRIEF DESCRIPTION OF THE DRAWINGS

[FIG. 1] Provided is a diagram illustrating an authentication space.
[FIG. 2] (a) is a block diagram illustrating an overall configuration of a biometric authentication system according to Embodiment 1, and (b) is a functional block diagram illustrating each function of an information processing device.
[FIG. 3] Provided is a flowchart illustrating ID linking processing.
[FIG. 4] Provided is a diagram illustrating an ID table stored in a memory.
[FIG. 5] Provided is a diagram illustrating a location information table stored in a memory.
[FIG. 6] Provided is a flowchart illustrating service provision processing.
[FIG. 7] Provided is a diagram illustrating extraction of feature information of a specific person from multiple images.
[FIG. 8] Provided is a block diagram illustrating a hardware configuration of an information processing device.

### DESCRIPTION OF EMBODIMENTS

Technologies that use biometric authentication to provide services such as payment are known. Using biometric authentication for payment eliminates the need to present cash or payment codes, allowing customers to shop more smoothly.

Furthermore, for example, by displaying personalized products identified through biometric authentication and the shelf location information where those products are located on an in-store electronic billboard, customers can shop even more smoothly.

For example, biometric authentication used for payment requires a high degree of certainty, indicating the authenticity of the individual, therefore a strict certainty threshold may be set to reduce the false acceptance rate. On the other hand, biometric authentication used for electronic billboards may be tolerable even if it requires a lower certainty value than that used for payment, and a looser certainty threshold may be set to reduce the false rejection rate in order to reduce the burden of authentication processing, or the like.

As such, the required certainty value may differ depending on the service provided. For example, when multiple services are offered at an airport, high accuracy values are required for determining whether a user can pass through an exit gate, check baggage, go through security, and purchase goods. On the other hand, lower accuracy values may be required for providing flight information, lounge access, campaign information, and free items.

However, when multiple services are offered, even if the accuracy values required for each service are different, the user is required to perform biometric authentication each time they use each service. This increases the processing load required for authentication processing. Therefore, the following embodiment describes a determination method, a determination program, and an information processing device that can reduce the processing load required for authentication processing.

### [Embodiment 1]

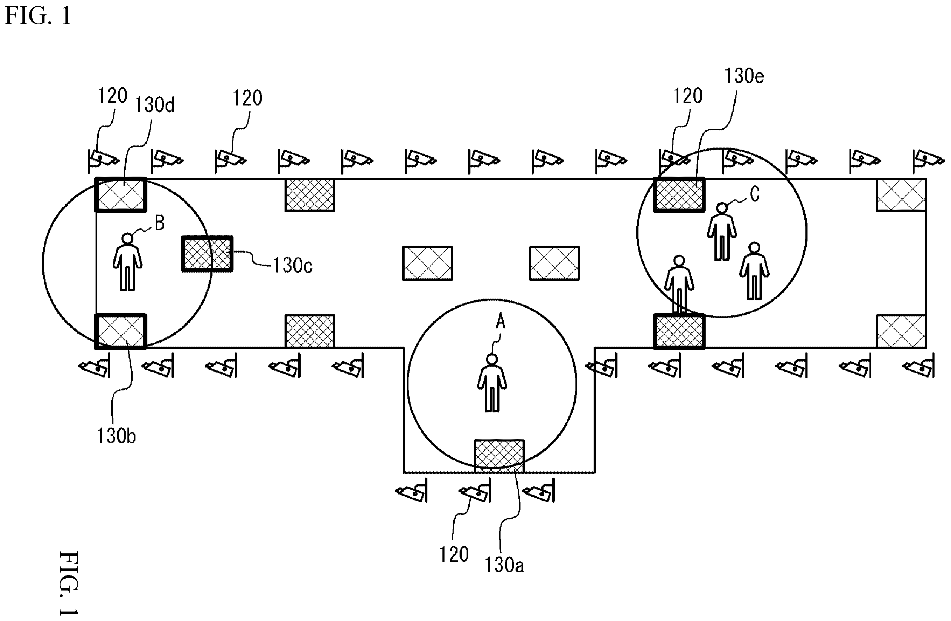

An overview of Embodiment 1 is described below. FIG. 1 is a diagram illustrating an authentication space. A person entering the authentication space in FIG. 1 registers his or her ID and characteristic information obtainable by a camera. The authentication space is a space where multiple services are provided.

For example, multiple service provider terminals 130a to 130e are installed in the authentication space. The accuracy values required for each of the service provider terminals 130a to 130e are set individually, and may be different or the same. The accuracy value refers to the degree of certainty that the person detected by the camera is the person in question. The higher the accuracy value, the higher the probability that the person detected by the camera is the person himself or herself.

A plurality of tracking cameras 120 are installed in different locations within the authentication space. Individuals can be detected from images captured by each of the tracking cameras 120. It is possible to estimate that the individual is the individual with the ID whose characteristic information extracted from the image most closely matches the registered characteristic information.

The location information of each of the tracking cameras 120 is stored, and the location of each individual can be detected by detecting which the tracking camera 120 the individual is captured in. By detecting each individual's location, it is possible to determine which service providing terminal each individual is eligible to receive services from.

For example, as illustrated in FIG. 1, by appearing in an image captured by a specific one of the tracking cameras 120, a person A is detected as being near the service provider terminal 130a and eligible to receive services from the service provider terminal 130a. In this case, it is determined whether the person A's accuracy value is equal to or greater than the accuracy value required by the service provider terminal 130a. If person A's accuracy value is equal to or greater than the accuracy threshold required by the service provider terminal 130a, the person A can receive services from the service provider terminal 130a.

For example, as illustrated in FIG. 1, a person B appears in an image captured by a specific one of the tracking cameras 120, and is detected as being near the multiple service provider terminals 130b to 130d and therefore in a state where he or she can receive services from the multiple service provider terminals 130b to 130d. In this case, a determination is made as to whether the person B's accuracy value is equal to or greater than the highest accuracy threshold required by the service provider terminals 130b to 130d. If the person B's accuracy value is less than the highest accuracy threshold, a message to improve the person B's accuracy value is displayed on the service provider terminals 130b to 130d. For example, a message to move the person B through a less crowded area or to a location with a better view may be displayed. If the person B passes through a less crowded area, the entire person is more likely to be captured by the tracking camera 120, allowing for more accurate capture of feature information and a higher accuracy value. Alternatively, if the person B moves to a position where he or she can directly face the tracking camera 120, feature information can be captured with greater accuracy, resulting in a higher accuracy value.

For example, as illustrated in FIG. 1, a person C is detected as being near the service provider terminal 130e and in a state where he or she can receive services from the service provider terminal 130e because he or she is captured in an image captured by a specific one of the tracking cameras 120. In this case, the service provider terminal 130e determines whether the accuracy value of the person C is equal to or greater than the accuracy threshold required by the service provider terminal 130e. If the area around the person C is crowded, the person C's accuracy value may be low. Therefore, the person C's accuracy value may fall below the accuracy threshold. In this case, the service provider terminal 130e displays a message to improve the person C's accuracy value.

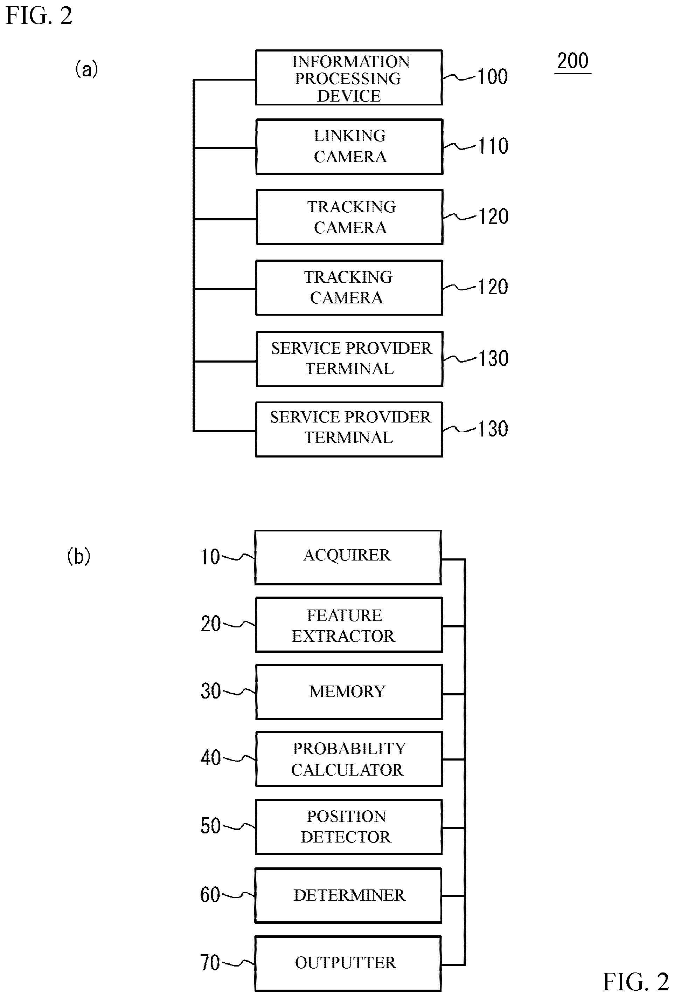

Details are provided below. FIG. 2(a) is a block diagram illustrating the overall configuration of a biometric authentication system 200 according to Embodiment 1. As illustrated in FIG. 2(a), the biometric authentication system 200 includes an information processing device 100, linking cameras 110, the tracking cameras 120, and the service provider terminals 130. These devices are connected via telecommunications lines.

The linking camera 110 is a camera installed at the gate of the authentication space or elsewhere, and is located in a position that makes it easy to acquire characteristic information about a person. There may be one or more of the linking cameras 110. The tracking camera 120 is a camera used to track a person in the authentication space, and is installed on the ceiling or elsewhere to make it easy to track the person. There may be one or more of the tracking cameras 120. The service provider terminal 130 is a terminal that provides services to users within the authentication space. There are two or more of the service provider terminals 130.

FIG. 2(b) is a functional block diagram illustrating each function of the information processing device 100. As illustrated in FIG. 2(b), the information processing device 100 functions as an acquirer 10, a feature extractor 20, a memory 30, a probability calculator 40, a position detector 50, a determiner 60, an outputter 70, and more.

Next, we will explain each process executed by the information processing device 100.

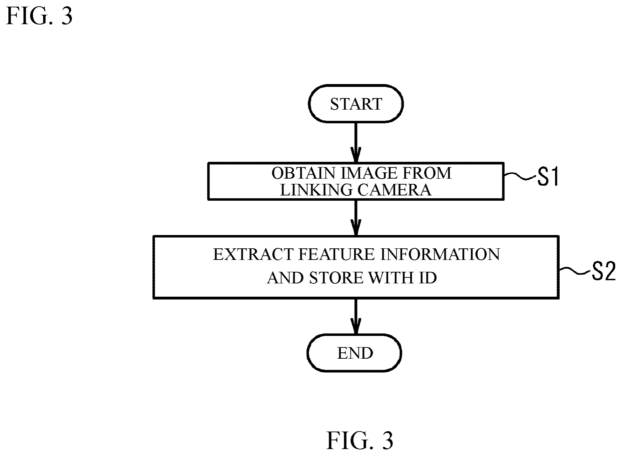

(ID Linking Process) FIG. 3 is a flowchart illustrating the ID linking process. When each user enters the authentication space, the acquirer 10 acquires an image from the linking camera 110 (step S1). To register their own feature information, each user assumes a posture that makes it easy to capture that feature information. For example, each user faces the linking camera 110 directly.

Next, the feature extractor 20 extracts feature information x_(i, 0), which is identification information used to identify a person, from the image acquired in step S1 and stores it in the memory 30 linked to the ID (step S2). Note that "i" is a user number assigned to each user (i = 1, 2, ..., I). Execution of the flowchart then ends.

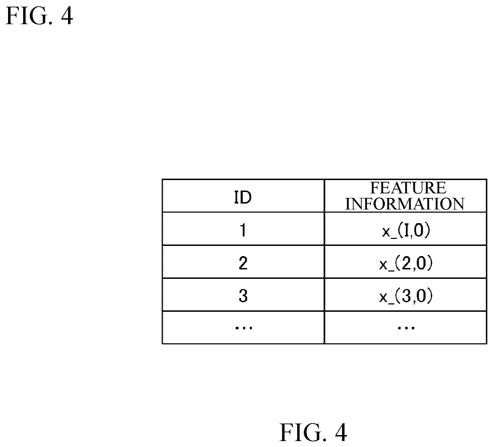

FIG. 4 is a diagram illustrating an ID table stored in the memory 30. As illustrated in FIG. 4, the ID table associates feature information with each ID. Note that because each user assumes a posture that makes it easy to obtain feature information, the feature information stored in the memory 30 is highly accurate.

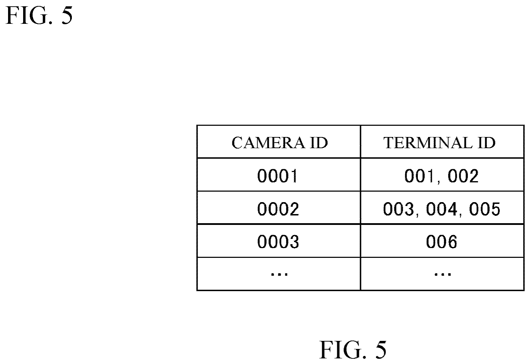

FIG. 5 is a diagram illustrating a position information table stored in the memory 30. As illustrated in FIG. 5, the location information table associates the identification information (camera ID) of each of the tracking cameras 120 with the identification information (terminal ID) of each of the service provider terminals 130. In this manner, it is possible to determine which tracking camera captures a person and thereby determine which service provider terminal is available to provide that person with a service.

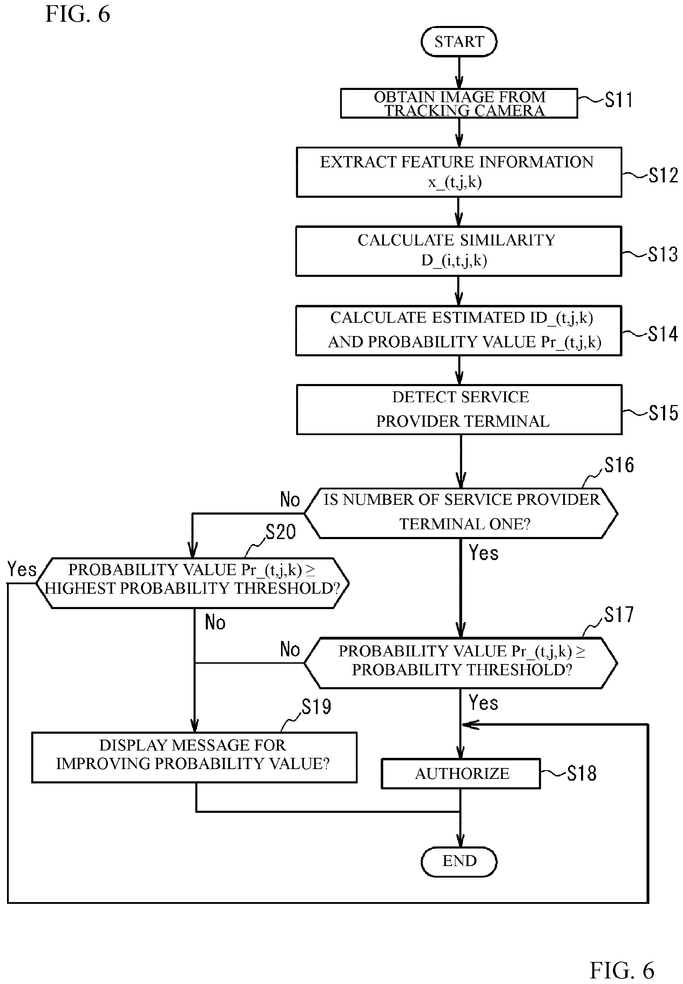

(Service Provision Process) FIG. 6 is a flowchart illustrating the service provision process when providing services to each user who has registered an ID. As illustrated in FIG. 6, the acquirer 10 acquires images from each of the tracking cameras 120 at a predetermined interval (Step S11).

Next, the feature extractor 20 extracts feature information x_(t, j, k) of the k-th person captured in the image captured by the j-th tracking camera 120 at time t (Step S12). By executing Step S12, feature information for all people captured in images captured by all the tracking cameras 120 is extracted.

Next, the probability calculator 40 calculates the similarity D_(i,t,j,k) between each piece of feature information x_(i,0) stored in the memory 30 and each piece of feature information x_(t,j,k) extracted in step S12 (step S13). For example, cosine similarity can be used as the similarity. By executing step S13, the similarity between all people appearing in images acquired by all the tracking cameras 120 and the feature information of each ID stored in the memory 30 is calculated.

Next, the probability calculator 40 calculates the estimated ID ID_(t,j,k) = argmax_i(D_(i,t,j,k)) of the k-th person captured by the j-th tracking camera 120 at time t, and the accuracy value Pr_(t,j,k) = max_i(D_(i,t,j,k)) (step S14). Here, the accuracy value is an index indicating the likelihood that the feature information corresponds to the target person. The accuracy value Pr_(t,j,k) = max_i(D_(i,t,j,k)) represents the maximum value of the similarity between the feature information of the k-th person and each ID stored in the memory 30. Therefore, by calculating the accuracy value Pr_(t,j,k), it is estimated which of the IDs stored in the memory 30 the k-th person corresponds to. The estimated value ID_(t,j,k) = argmax_i(D_(i,t,j,k)) is the estimated ID.

Next, the position detector 50 references the position table in the memory 30 and detects the service provider terminal 130 linked to the tracking camera 120 that captured the image showing the j-th person (step S15).

Next, the determiner 60 determines whether there is one service provider terminal 130 detected in step S15 (step S16). By executing step S16, it is possible to determine whether there is one or multiple of the service provider terminals 130 from which the j-th person can receive services.

If step S16 returns "Yes," the determiner 60 determines whether the accuracy value Pr_(t, j, k) of the j-th person is equal to or greater than the accuracy threshold set for the service provider terminal 130 detected in step S15 (step S17).

If step S17 returns "Yes," the determiner 60 authorizes the j-th person to use the service provider terminal 130 detected in step S15 (step S18). As a result, the k-th person can receive the service authorized by the determiner 60 using the corresponding service provider terminal 130. Execution of the flowchart then ends.

If step S17 returns "No," the outputter 70 displays a message to improve the accuracy value on the service provider terminal 130 detected in step S15 (step S19). For example, a message may be displayed to direct the person to a less crowded area or to a location with a better image. Alternatively, a message may be displayed to encourage the person to change their posture and adopt a more accurate posture. Alternatively, the size of the displayed text may be varied to encourage the person to move closer to or further away from the display screen, thereby encouraging a change in posture. Execution of the flowchart then ends.

If step S16 returns "No," the determiner 60 determines whether the accuracy value Pr_(t, j, k) of the j-th person is equal to or greater than the highest accuracy threshold among the accuracy thresholds of the multiple candidate service provider terminals 130 detected in step S15 (step S20).

If step S20 returns "Yes," step S18 is executed. As a result, the k-th person can receive the service approved by the determiner 60 using the corresponding service provider terminal 130. If step S20 returns "No," step S19 is executed.

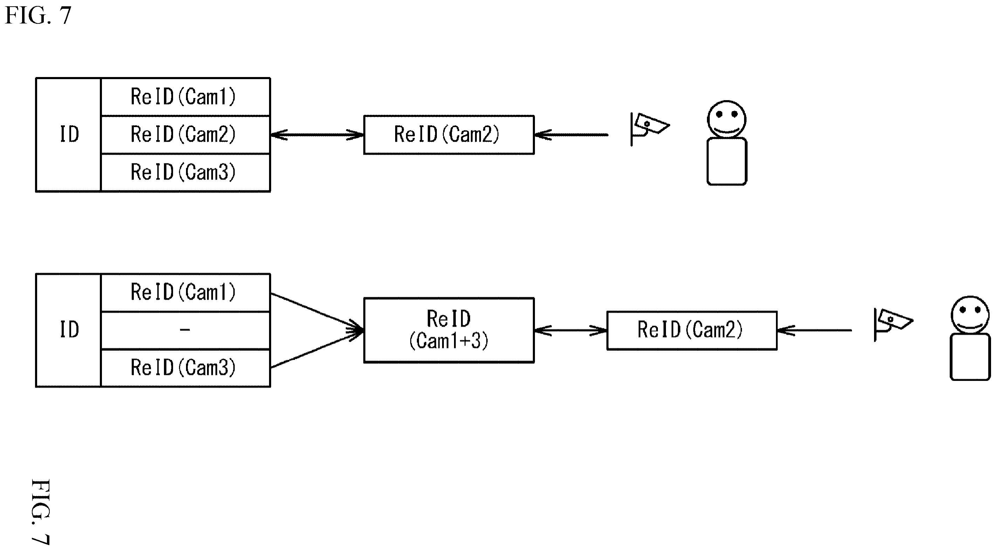

Note that characteristic information of a specific person may be extracted from multiple images captured by the multiple tracking cameras 120. FIG. 7 illustrates an example of extracting characteristic information of a specific person from the multiple images. As illustrated in FIG. 7, when the ID and the feature information are associated and stored in the memory 30, the feature information obtained from each camera (Cam1, Cam2, Cam3) may be stored individually.

If a person with an undetermined ID is captured on camera, the ID may be compared with the characteristic information of each ID. For example, as illustrated in the lower part of FIG. 7, for IDs for which no characteristic information for Cam2 exists, the ID may be compared with the characteristic information obtained by averaging the characteristic information for the other cameras (the characteristic information for Cam1 and Cam2).

Note that in the above example, the camera ID of each of the tracking cameras 120 is linked to the terminal ID of each service provider terminal 130 to identify the service provider terminal 130 that is available to receive each person's service. However, this is not limited to this. For example, the relationship between each position in the authentication space and the service provider terminals 130 within a predetermined range (for example, a 10-meter radius) from that position may be stored in the memory 30, and the service provider terminal 130 corresponding to the position n of each person detected from images captured by each of the tracking cameras 120 may be identified.

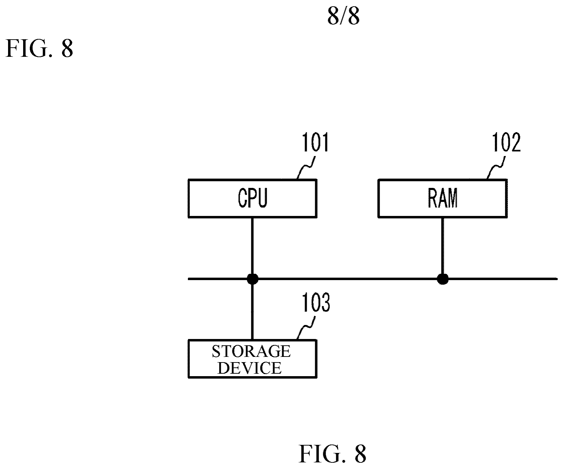

FIG. 8 is a block diagram illustrating the hardware configuration of the information processing device 100. As illustrated in FIG. 8 , the information processing device 100 includes a CPU 101, a RAM 102, a storage device 103, and the like. The CPU (Central Processing Unit) 101 is a central processing unit. The RAM (Random Access Memory) 102 is a volatile memory that temporarily stores programs executed by the CPU 101 and data processed by the CPU 101. The storage device 103 is a non-volatile storage device. For example, the storage device 103 may be a ROM (Read Only Memory), a solid state drive (SSD) such as a flash memory, or a hard disk driven by a hard disk drive. The CPU 101 executes a determination program stored in the storage device 103, thereby realizing the functions of each unit of the information processing device 100. Note that the functions of each unit of the information processing device 100 may be configured using dedicated circuits or the like.

In each of the above examples, the probability calculator 40 is an example of an accuracy calculator that calculates an accuracy value indicating the likelihood that identification information identifying a person detected from an image corresponds to the person. When the determiner 60 acquires the person's location information, it references a memory that stores an accuracy threshold and location information for each of a plurality of services in association with each other, and determines whether the calculated accuracy value is equal to or greater than the accuracy threshold of the service among the plurality of services that corresponds to the person's location information. When the outputter 70 determines that the accuracy value is not equal to or greater than the accuracy threshold, it outputs a message to the person to improve the accuracy value.

The above-described embodiment is a preferred example of the present invention. However, the present disclosure is not limited to this, and various modifications can be made without departing from the scope of the present invention. Description of Symbols

- 10: Acquirer
- 20: Feature extractor
- 30: Memory
- 40: Probability calculator
- 50: Position detector 50
- 60: Determiner
- 70: Outputter
- 100: Information processing device
- 110: Linking camera
- 120: Tracking camera
- 130: Service provider terminal
- 200: Biometric authentication system

## Claims

1. A determination method **characterized in that** a computer executes a process including:
when identification information that identifies a person detected from an image is obtained, calculating a probability value indicating likelihood that the identification information corresponds to the person; and
when location information of the person is obtained, referring a memory that stores a probability threshold and location information for each of multiple services in association with each other, and determining whether a calculated probability value is equal to or greater than the probability threshold of a service that corresponds to the location information of the person among the multiple services.

2. The determination method as claimed in claim 1, **characterized in that** the computer executes outputting a message to the person to improve the probability value, when the probability value is not determined to be equal to or greater than the probability threshold.

3. The determination method as claimed in claim 1, **characterized in that** the computer executes determining whether the probability value is equal to or greater than a highest probability threshold value among corresponding services, when there are multiple services corresponding to the location information of the person among the multiple services.

4. The determination method as claimed in claim 3, **characterized in that** the computer executes outputting a message to the person to improve the probability value, when the probability value is not determined to be equal to or greater than the highest probability threshold.

5. The determination method as claimed in claim 1, **characterized in that** the computer executes calculating a probability value indicating likelihood that the identification information corresponds to the person, by using a plurality of different images in which the person is detected.

6. A determination program **characterized by** causing a computer to execute a process including:
when identification information that identifies a person detected from an image is obtained, calculating a probability value indicating likelihood that the identification information corresponds to the person; and
when location information of the person is obtained, referring a memory that stores a probability threshold and location information for each of multiple services in association with each other, and determining whether a calculated probability value is equal to or greater than the probability threshold of a service that corresponds to the location information of the person among the multiple services.

7. The determination program as claimed in claim 6, **characterized by** causing the computer to execute outputting a message to the person to improve the probability value, when the probability value is not determined to be equal to or greater than the probability threshold.

8. The determination program as claimed in claim 6, **characterized by** causing the computer to execute determining whether the probability value is equal to or greater than a highest probability threshold value among corresponding services, when there are multiple services corresponding to the location information of the person among the multiple services.

9. The determination program as claimed in claim 8, **characterized by** causing the computer to execute outputting a message to the person to improve the probability value, when the probability value is not determined to be equal to or greater than the highest probability threshold.

10. The determination program as claimed in claim 6, **characterized by** causing the computer to execute calculating a probability value indicating likelihood that the identification information corresponds to the person, by using a plurality of different images in which the person is detected.

11. An information processing device **characterized by** comprising:
a probability calculator configured to calculate a probability value indicating likelihood that identification information for identifying a person detected from an image corresponds to the person; and
a determiner configured to, when location information of the person is obtained, refer a memory that stores a probability threshold and location information for each of multiple services in association with each other, and determine whether a calculated probability value is equal to or greater than the probability threshold of a service that corresponds to the location information of the person among the multiple services.

12. The information processing device as claimed in claim 11 further comprising:
an outputter configured to output a message to the person to improve the probability value, when the probability value is not determined to be equal to or greater than the probability threshold.

13. The information processing device as claimed in claim 11,
wherein the determiner determines whether the probability value is equal to or greater than a highest probability threshold value among corresponding services, when there are multiple services corresponding to the location information of the person among the multiple services.

14. The information processing device as claimed in claim 13 further comprising:
an outputter configured to output a message to the person to improve the probability value, when the probability value is not determined to be equal to or greater than the highest probability threshold.

15. The information processing device as claimed in claim 11,
wherein the probability calculator calculates a probability value indicating likelihood that the identification information corresponds to the person, by using a plurality of different images in which the person is detected.
